(19) Europäisches Patentamt
European Patent Office
Office européen des brevets

(11) **EP 4 002 231 A1**

(12) **EUROPEAN PATENT APPLICATION**

(43) Date of publication:
**25.05.2022 Bulletin 2022/21**

(21) Application number: **20383001.3**

(22) Date of filing: **18.11.2020**

(51) International Patent Classification (IPC):
***G06N 20/20*** *(2019.01)*

(52) Cooperative Patent Classification (CPC):
**G06N 20/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Telefonica Digital España, S.L.U.**
**28013 Madrid (ES)**

(72) Inventors:
• **KOURTELLIS, Nicolas**
  **28013 MADRID (ES)**
• **PERINO, Diego**
  **28013 MADRID (ES)**
• **KATEVAS, Kleomenis**
  **28013 MADRID (ES)**

(74) Representative: **Herrero & Asociados, S.L.**
**Cedaceros, 1**
**28014 Madrid (ES)**

(54) **FEDERATED MACHINE LEARNING AS A SERVICE**

(57)    It is proposed a technical solution (Federated Learning as a Service, FLaaS) which allows that a service provider (for example, a communications operator) facilitates interested other applications or services to compute privacy-preserving ML models on users' data (for example, data of the service provider users). This service enables different scenarios of 3rd-party applications collaborative model building, and addresses challenges of permission and privacy management, usability, and hierarchical models training.

FIG. 1

**Description**

**TECHNICAL FIELD**

The present invention relates to machine learning (ML) techniques and more particularly, to methods and systems to enhance performance of Federated Machine Learning to offer it as an efficient service for 3-rd party applications or services in an efficient and resource saving way and preserving data privacy at the same time.

**BACKGROUND**

Privacy-preserving machine learning (PPML) is an emerging space from the machine learning technical domain, which enables someone to build machine-learning models that respect the privacy of data used to build said models. These novel methods provide guarantees on how much information an attacker can learn about the data used to train these models, as well as the structure of the models themselves.

From the available privacy-preserving machine learning techniques, Federated Learning (also known as Federated Machine Learning or Collaborative Learning) is an interesting new paradigm proposed recently by academia and industrial or research laboratories/working groups which allows interested parties to build a machine learning model in a decentralized fashion on user devices, without leaking raw data out of the participating devices. In other words, Federated Learning enables multiple actors to build a common, robust machine learning model without sharing data, thus allowing to address critical issues such as data privacy, data security, data access rights and access to heterogeneous data.

Generally speaking, Federated Learning (FL) techniques are machine learning techniques that train an algorithm (also called machine learning model) across multiple decentralized edge devices (e.g., client devices) holding local data samples, without exchanging them. Indeed, FL enables local training on user devices, avoiding user data to be transferred to centralized servers, and can be enhanced with differential privacy mechanisms. Although FL has been recently deployed in real systems, the possibility of collaborative modelling across different 3rd-party applications has not yet been explored.

Offering Machine Learning as a Service (MLaaS) has been on the rise in the last years due, among other reasons, to increased collection and processing of big data from different companies, availability of public APIs (Application Programming Interface), novel advanced machine learning (ML) methods, open-sourced libraries and tools for large-scale ML analytics. Thus, in the last few years, several companies offer services in the cloud, that enable third party companies with reduced technology or processing capabilities, to compute machine learning models on their data in a remote or outsourcing fashion. Such MLaaS systems have been predominantly centralized: all data of users/clients/devices need to be uploaded to the cloud service provider. That is, the interested third-party company uploads their data on the cloud service, selects the desired model to be computed (or lets the service find the best model for the data) and then the cloud service trains and tests the appropriate machine learning model before delivering it back to the third-party company. Large companies offering such services include Amazon Web Services, Microsoft Azure or Google Cloud, for example.

Moving beyond the centralized machine learning space, in which all the data need to be uploaded to the cloud service provider, some new initiatives have been proposed in the recent past in the space of decentralized ML.

For example, Decentralized Machine Learning (DML) is a (now abandoned) blockchain (BC) based project that enables its participants to build models in a distributed fashion, while also growing the BC network itself. Other open-source community efforts propose libraries and platforms that will allow users to train ML models in a decentralized fashion. For example, OpenMined proposes the libraries PySyft and PyGrid, by employing multiparty computation (MPC), homomorphic encryption, Differential Privacy (DP) and Federated Learning (FL) for secured and PPML modeling in a decentralized fashion, in both mobile and desktop environments. Building on the popular TensorFlow (TF) framework, TensorFlow Federated (TFF) is another open-source framework for ML and other computations on decentralized data.

Regarding the use of DP (publicly sharing information about a dataset by describing the patterns of groups within the dataset while withholding information about individuals in the dataset) in Federated Learning, DP-noise can be introduced at different stages of the FL system: in the data source at the client side, also known as local-DP, at the central server side while building the global model, or at an intermediate stage such as edge computing nodes or base stations, or with hybrid methods and hierarchical methods. The introduction of DP-noise in the ML-pipeline affects the convergence rate of the FL-trained model.

Other recent solutions build FL models in a hierarchical fashion across different network layers: end-user device, ISP edge nodes, or the central server.

Summarizing, Federated Learning (FL) is a natural evolution of centralized ML methods, as it allows companies employing FL to build ML models in a decentralized fashion close to users' data, without the need to collect and process them centrally. In fact, FL has been recently extended and applied in different settings, and recently deployed in real systems. Also, privacy guarantees can be provided by applying methods such as DP, or even by computing models within a P2P network. In addition, recent start-up efforts in the FL space aim in providing FL support and tools to 3rd-party customers or end-users.

However, all these recent academic and industrial efforts have not addressed fundamental challenges in FL space, such as:

*How to enable collaborative modelling across different 3rd-party applications, to solve existing or new ML problems? How to perform effective permission and privacy management of data and models shared across such collaborating entities? How to take advantage of topological properties of communication networks, for better FL modelling convergence, without compromising user and data privacy?*

Specifically, the existing FL solutions present, among others, the following drawbacks:

- Do not allow independent 3rd-party applications or services to combine common-type data and models, from different applications into building the same meta-model for better accuracy.

- Do not allow independent 3rd-party applications or services to combine models from multiple such 3rd-party applications and services into meta-models solving new problems never before possible.

- Do not provide capabilities for running the service on low resources devices, such as mobile phones.

Therefore, there is a need of an improved FL-based framework, which address the above stated challenges and drawbacks, facilitating a wave of new applications and services based on FL.

SUMMARY

The problems found in prior art techniques are generally solved or circumvented, and technical advantages are generally achieved, by the disclosed embodiments which provide methods and systems to improve FL machine learning.

It is proposed a technical solution (called Federated Learning as a Service, FLaaS) which allows that a service provider (for example, a communications operator such as Telefonica or any other) facilitates interested applications or services (3rd-party applications or services), internal or external to the service provider, to compute privacy-preserving ML models on users' data (for example, data of the service provider users). This service enables different scenarios of 3rd-party application collaborative model building, and addresses challenges of permission and privacy management, usability, and hierarchical model training.

FLaaS can be deployed in different operational environments and, as it will be explained later, the modelling can be performed on users' electronic devices, that could be located at home and/or are part of the communications operator network (i.e., Set-Top-Box, Router, HAAC Home as a Computer devices as for example Aura), or other IoT devices owned by the user, or users' mobile phones.

In particular, FLaaS will be of great value for a communications operator, since it can be deployed wherever the operator has business with home / office users, as well as mobile users. The service could be running on any operator-owned device that has access to data, or at the users' owned devices (e.g., mobile phones), as a native application within each participating phone. FLaaS allows 3rd-party services to build ML models on the operator users' data, without outporting these data anywhere. The ML models are built locally, on-device, and thus they are privacy-preserving.

FLaaS makes among others, the following contributions in FL space:

- It provides high-level and extensible APIs and an SDK (Software Development Kit) for service usage and privacy/permissions management;
- It enables the collaborative training of ML models across its customers on the same device using said APIs, in a federated, secured, and privacy-preserving fashion;
- It enables the hierarchical construction and exchange of ML models across the network;
- It can be instantiated in different types of devices and operational environments: mobile phones, home devices, edge nodes, etc.

In the present embodiments, in a first aspect, it is proposed a method for improving Federated Machine Learning between a set of K participating devices (client electronic devices), K>=1, where a common set of participating applications is installed (e.g. running) in each participating device (where each application wants to build an own machine learning model) and where the participating devices communicate through one of more communications networks with a central computing node, the method comprising the following steps:

a) The participating devices receiving from the central computing node information related to a set of parameter values for a global machine learning model for each participating application and going to step b); (in the first iteration said parameter values will be a set of initial parameter values)

b) Each participating device, for each participating application, based on local training data obtained by the participating application (in the participating device) and in the received information related to the set of parameter values for the global machine learning model for the participating application, determining information related to an updated set of parameter values for a local machine learning model for the participating application in the participating device; and sending the information to the central computing node and going to step c);

c) The central computing node determining an updated set of parameters for the global machine learning model for each participating application based on aggregation of the information received from the participating devices and, if certain preestablished stop criteria are not fulfilled, sending information related to the updated set of parameters for the global machine learning model for each participating application to the participating devices and going to step a).

In a second aspect, it is proposed a method for improving Federated Machine Learning between a set of K participating devices, K>=1, where a common set of participating applications is installed in each participating device, (where the applications want to build a common machine learning model) and where the participating devices communicate through one of more communications networks with a central computing node, the method comprising the following steps:

a) The participating devices receiving from the central computing node information related to a set of parameter values for a global machine learning model common for all participating applications (the same for all participating applications) and going to step b);

b) Each participating device, based on local training data obtained by the participating applications and in the received information related to the set of parameter values for the global machine learning model, determining information related to an updated local set of parameter values for a common local machine learning model for all the participating applications in the participating device and sending the information to the central computing node and going to step c);

c) The central computing node determining an updated set of parameters for the common global machine learning model (common for all participating applications) based on aggregation of the information received from the participating devices and, if certain preestablished stop criteria are not fulfilled, sending information related to the updated set of parameters for the common global machine learning model to the participating devices and going to step a).

In an embodiment, in step b), the information related to an updated local set of parameter values for the common local machine learning model is determined by each participating device training the common local machine learning model based on local training data shared by all the participating applications in each participating device.

In an embodiment, in step b), each participating application trains a local machine learning model personalized by each participating application and shares information about said personalized local machine learning model and, based on said shared information by all the participating applications, the participating devices determines the information related to an updated local set of parameter values for the common local machine learning model of the participating device.

In a third aspect, it is proposed a method for improving Federated Machine Learning between a set of K participating devices, K>=1, where a common set of participating applications is installed in each participating device, and where the participating devices communicate through one of more communications networks with a central computing node, the method comprising the following steps:

a) The participating devices receiving from the central computing node information related to a set of parameter values for a global machine learning model for a certain participating application, called primary application and going to step b);

b) Each participating device, based on local training data obtained by the primary application, on local training data obtained by one or more other participating applications, called secondary applications, and in the received information related to the set of parameter values for the global machine learning model, determining information related to an updated local set of parameter values for a local machine learning model for the primary application and sending the information to the central computing node and going to step c);

c) The central computing node determining an updated set of parameters for the global machine learning model for the primary application, based on aggregation of the information received from the participating devices and, if a certain preestablished stop criteria is not fulfilled, sending information related to the updated set of parameters for the common global machine learning model to the participating devices and going to step a).

In an embodiment, the information related to an updated local set of parameter values for the local machine learning model for the primary application, is determined by each participating device training the local machine learning model based on local training data shared by the primary application and by the secondary applications.

In an embodiment, in step b), the primary application and the secondary applications trains a local machine learning model personalized by each participating application and shares information about said personalized local machine learning model and, based on said shared information, the device determines the information related to an updated local set of parameter values for the local machine learning model for the primary application.

In an embodiment, in step b), said information related to an updated local set of parameter values for the local machine learning model is related to the loss of prediction function for the local set of parameter values for the local machine learning model.

In an embodiment, in step b), the predefined stop criteria (requirements) are one or more of the following: a certain number of iterations is reached, the global machine learning model error is below a certain threshold or the information about local updates from the participating devices is similar to the previous iteration.

In an embodiment, the participating devices are at least one of the following: mobile phones, smartphones, laptops, IoT devices, Smart TVs, Personal Computers, tablets.

In an embodiment, the central computing node is a central server or the central computing node is located in a Base Station of a mobile communication networks.

In other aspects, systems to perform the above stated methods are proposed. Specifically, in a further aspect, it is proposed a system for improving Federated Machine Learning, the system comprising:

- a central computing node;
- a set of K participating devices, K>=1, where a common set of participating applications is installed in each participating device, where the participating devices communicate through one of more communications networks with the central computing node, and where each participating device is configured to:

  - Receive from the central computing node information related to a set of parameter values for a global machine learning model for each participating application;
  - For each participating application, based on local training data of the participating application and in the received information related to the set of parameter values for the global machine learning model for the participating application, determine information related to an updated set of parameter values for a local machine learning model for the participating application; and send the information to the central computing node;

And where the central computing node is configured to:

- Determine an updated set of parameters for the global machine learning model for each participating application based on aggregation of the information received from the participating devices and,
- If certain preestablished stop criteria are not fulfilled, send information related to the updated set of parameters for the global machine learning model for each participating application to the participating devices.

In another further aspect, it is proposed a system for improving Federated Machine Learning, the system comprising:

- a central computing node;
- a set of K participating devices, K>=1, where a common set of participating applications is installed in each participating device, where the participating devices communicate through one of more communications networks with the central computing node, and where each participating device is configured to:

  - Receive from the central computing node information related to a set of parameter values for a global machine learning model common for all participating applications;
  - Based on local training data of the participating applications and in the received information related to the set of parameter values for the global machine learning model, determine information related to an updated local set of parameter values for a common local machine learning model for all the participating applications in the participating device and send the information to the central computing node;

And where the central computing node is configured to:

- Determine an updated set of parameters for the common global machine learning model based on aggregation of the information received from the participating devices and,

- If certain preestablished stop criteria are not fulfilled, send information related to the updated set of parameters for the common global machine learning model to the participating devices.

In another further aspect, it is proposed a system for improving Federated Machine Learning, the system comprising:

- a central computing node;
- a set of K participating devices, K>=1, where a common set of participating applications is installed in each participating device, where the participating devices communicate through one of more communications networks with the central computing node, and where each participating device is configured to:

  - Receive from the central computing node information related to a set of parameter values for a global machine learning model for a certain participating application, called primary application;
  - Based on local training data obtained from the primary application, on local training data obtained from one or more other participating applications, called secondary applications, and in the received information related to the set of parameter values for the global machine learning model, determine information related to an updated local set of parameter values for a local machine learning model for the primary application and send the information to the central computing node;

And where the central computing node is configured to:

- Determine an updated set of parameters for the global machine learning model for the primary application, based on aggregation of the information received from the participating devices and,
- If certain preestablished stop criteria are not fulfilled, send information related to the updated set of parameters for the common global machine learning model to the participating devices.

A last aspect of the invention refers to a computer program product comprising computer program code adapted to perform the methods of the invention, when said program code is executed on a computer, a digital signal processor, a field-programmable gate array, an application-specific integrated circuit, a microprocessor, a micro-controller, or any other form of programmable hardware. A non-transitory digital data storage medium is also provided for storing a computer program which comprises instructions causing a computer executing the program to perform the above-described method.

Consequently, according to the invention, methods, systems and storage medium according to the independent claims are provided. Favourable embodiments are defined in the dependent claims.

These and other aspects and advantages of the invention will be apparent from and elucidated with reference to the embodiments described hereinafter.

## BRIEF DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1 shows a general schematic diagram of example of use cases to be supported by the proposed solution, FLaaS, according to one embodiment in the present invention.

Figure 2 shows a schematic block diagram illustrating the basic service components an interaction between them, according to one embodiment in the present invention.

Figure 3 shows a schematic diagram of the generic FLaaS ML modelling architecture according to one embodiment in the present invention.

Figure 4 shows a schematic diagram of an example of the FLaaS modelling architecture for use case 1 according to one embodiment in the present invention.

Figure 5 shows a schematic diagram of an example of the FLaaS modelling architecture for use case 2, where local data is shared for joint model building, according to one embodiment in the present invention.

Figure 6 shows a schematic diagram of an example of the FLaaS modelling architecture for use case 2, where personalized gradients are shared for joint model building, according to one embodiment in the present invention.

Figure 7 shows a schematic diagram of an example of the FLaaS modelling architecture for use case 2, where personalized models are shared for joint model building, according to one embodiment in the present invention.

Figure 8 shows a schematic diagram of an example of the FLaaS modelling architecture for use case 3, where local data is shared for joint model building, according to one embodiment in the present invention.

Figure 9 shows a schematic diagram of an example of the FLaaS modelling architecture for use case 3, where personalized models are shared for joint model building, according to one embodiment in the present invention.

## DESCRIPTION OF EMBODIMENTS

The present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The embodiments of the present invention propose a FL technical solution and architecture (FLaaS) which allows that a service provider facilitates other applications to compute privacy-preserving ML models on users' data enabling different scenarios of 3rd-party applications collaborative model building, optimizing the FL operation, for example improving permission and privacy management, usability, and hierarchical machine learning model training.

Now, for a better understanding of the embodiments of the invention, the basis of the FL optimization problem will be here briefly explained:

The FL optimization problem usually has the following typical assumed features (which, at the same time, are some of the challenges/handicaps of the FL optimization):

- Massively distributed: Number of examples (data) available per client (device) is expected to be much smaller than the number of clients participating in an optimization.
- Limited Communication: Devices can be typically offline or with intermittent or slow connectivity, and their bandwidth can be considered an expensive commodity (especially if no WiFi connection is available).
- Unbalanced: Data available for training on each device is of different sizes, since users can have different usage profiles. In other words, some clients may produce significantly more data than others.
- Highly Non-IID (Independent Identically Distributed): Data available on each client is typically non-representative of the population distribution, as they only reflect the given client's usage of the device. In other words, the data generated by each user are quite different.
- Unreliable Compute Nodes: Devices can go offline unexpectedly; there is expectation of faults and adversaries.
- Dynamic Data Availability: The subset of data available is non-static, e.g., due to differences in hour, day, country.

In the following formulae, these notations will be used:

- Set of devices (clients) involved in the FL is **K**; total number of devices in the set is K (K= |**K**|); a given client is identified as $k \in \mathbf{K}$;
- Total number of rounds R; a given round is identified as $r \in [0, R]$
- Fraction of devices used (selected) per round: $C \in [0, 1]$. That is, K is the total number of client devices. If C=1, then the selected clients per round will be K. However, maybe fewer clients are expected to respond or maybe fewer clients are selected for a round. For example, if there are K=1000 clients, in every round there could be input requested only from 100 clients, to make it feasible and not having to wait for all to respond; in this example, since C is defined as the fraction of client devices selected to participate per round, therefore C=0.1.
- Number of data samples across all clients: n. That is, the training dataset contains n input-output pairs $x_i$, $y_i$, $i \in [1, n]$
- Set of indices of data samples on device k: $P_k$
- Number of data samples available at device k: $n_k = |P_k|$
- Batch size of data samples used per client: B. Each client device has $n_k$ samples, but not all have to be used in each local iteration. Instead, a subset of them, i.e., a batch B, is used. For example, if a client has 100 photos to be used for the local training, a batch of B=20 photos can be used, per iteration (Epoch). Usually, the number of data sample used B is fixed for all rounds and iterations. However, the actual set of data (i.e., photos in the example) can change from round to round.
- Number of iterations of device k on local data: E. Here, it is supposed that all the client devices make the same number E of iterations, and, this is indeed usually the case. FLaaS Global (e.g., the central server) usually sends B, E, and other parameters to all participating clients who are expected to perform the same exact number of steps on the same skeleton model given, albeit on different data (the available local data per client).

In a machine learning model, given a training dataset containing n input-output pairs $x_i$, $y_i$, $i \in [1, n]$ the goal is to find a set of d parameters $w$, such that the average of outputting $y_i$, (p ($y_i$)) is maximized given an input $x_i$.

In other words, the goal is to find a set of parameters $w$ for the machine learning model, such that it is maximized the sum of the n probabilities that, for a given set of inputs $x_i$. $i \in [1, n]$, the output is $y_i$. $i \in [1, n]$. (this probability is denoted as $p(y_i \mid x_i, w)$). This is equivalent to find the set of parameters w for the machine learning model that minimizes the sum of the n loss functions $l(x_i, y_i, w)$ which, in an example, is defined as $l(x_i, y_i, w) = -\log (p(y_i \mid x_i, w))$.

Hence, the FL-based algorithms (also called Federated Aggregation, FA, Algorithms) have finite-sum objectives of the form:

$$\min_{w \in \mathbb{R}^d} f(w), \quad \text{where} \quad f(w) \overset{\text{def}}{=} \frac{1}{n} \sum_{i=1}^{n} f_i(w)$$

Where $f_i(w)$ is typically defined as the loss of prediction on seen examples $(x_i, y_i)$, i.e., $f_i(w) = l(x_i, y_i, w)$ as previously defined, using the trained model with a set of d parameters w. All training data (pairs $(x_i, y_i)$) available in the system (n) are partitioned over K clients (client devices), each with a subset of $n_k$ data pairs (indices) $P_k$. In other words, each device k will have as training data pairs $(x_i, y_i)$ $i \in P_k$.

Then, assuming C=1, i.e., all available clients K are participating in the FL round, the problem objective can be rewritten as minimizing f(w):

$$f(w) = \sum_{k=1}^{K} \frac{n_k}{n} F_k(w), \quad \text{where} \quad F_k(w) = \frac{1}{n_k} \sum_{i \in P_k} f_i(w)$$

Given the assumption of non-IID data, $F_k$ could be an arbitrarily bad approximation to f.

The model optimization under FL assumes a decentralized architecture, which performs a Federated Aggregation Algorithm with the client devices and a central server. Each client device k executes a stochastic gradient decent (SGD) step (iteration t) on the local data available, $g_k = \nabla F_k (w_t)$, where $\nabla$ is the gradient symbol and $w_t$ is the value of the parameters of the global model on the iteration t. Assuming C=1 (i.e., all the K available clients are participating), at iteration t, the central server aggregates all gradients and applies the update on the global model:

$$w_{t+1} \leftarrow w_t - \eta \sum_{k=1}^{K} \frac{n_k}{n} g_k$$

since

$$\sum_{k=1}^{K} \frac{n_k}{n} g_k = \overline{\nabla} f(w_t),$$

where $\eta$ is a fixed learning rate (a design parameter).

Equivalently, every client device can update for iteration t, their local model version (the model version of the device) of the parameters as: $w_{t+1}^k \leftarrow w_t - \eta g_k$, where $w_{t+1}^k$ is the set of parameters of the local model in client device k for iteration t+1.

The server can aggregate all responses from client devices and average over them to produce the new global model at iteration t+1:

$$w_{t+1} \leftarrow \sum_{k=1}^{K} \frac{n_k}{n} w_{t+1}^k,$$

where $w_{t+1}$ is the value of the parameters of the global model on the iteration t+1.

In an embodiment, this process can be repeated for t ∈ E iterations locally per each client k, before sharing models with the server in R rounds (In other words, in each optimization or communication round, the clients are forced to do gradient decent E times or iterations, on a batch of data B that were selected for that round). Therefore, the client can iterate the local update:

$$w^k \leftarrow w^k - \eta \nabla F_k(w^k)$$

for E times, before the aggregation and averaging at the central server, per round r:

$$w_{r+1} \leftarrow w_r - \eta \sum_{k=1}^{K} \frac{n_k}{n} g_k$$

where $w_{r+1}$ is the value of the parameters of the global model on the communication round r+1, and it is based on the weighted averaging of updates received by all client devices and the previous version of the global model ($w_r$).

A communication or optimization round is done across all participating clients. For example, R=100 means there will be 100 times that all participating clients will perform local training and will send 100 times their model to the aggregator for summarization, and then re-distribution. E iterations (or Epochs) are done in one client, during local training.

So there are R rounds (across all clients), E epochs or iterations per client and B batch of data used per epoch per client. The federated aggregation can be done per iteration per round, but this is very time consuming (since the client devices will have to communicate to the server E*R times). For this reason, instead, in an embodiment (as the one explained in the above paragraph), E iterations are performed per client and then the model is shared with the central server; that is, each client device shares the local model with the central server R times and, of course receives the global model R times.

It becomes apparent that design factors such as E iterations per client, C clients participating, and R rounds executed, can have high impact on model performance, and communication cost incurred in the infrastructure to reach it.

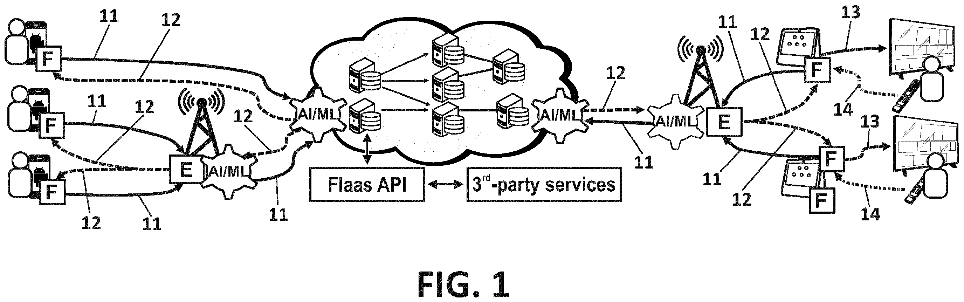

The proposed solution (FLaaS) aims at providing to single applications an easy way to use FL (without the complex, costly and time/resources-consuming process of developing and tuning the algorithms), as well as to enable multiple applications to collaboratively build models with minimal efforts. Specifically, FLaaS is designed to support at least the following use-cases (some examples in Figure 1):

1. Unique FL model per individual application for an existing ML problem (without the need of developing the algorithms). Traditionally, ML modelling is requested uniquely per application aiming to solve a specific, existing ML problem: e.g., a streaming music application that wants to model its users' music preferences to provide better recommendations.

2. Unique FL model trained in a joined fashion between two or more collaborative applications for an existing ML problem. That is, a group G of applications interested in collaborating to build a shared ML model that solves an existing problem, identical and useful for each application, but on more shared data: e.g., Instagram and Facebook (owned by the same company) may want to build a joint ML model for better image recognition.

3. Unique FL model trained in a joined fashion between two or more collaborative applications, as in case (2), but for a novel, never explored ML problem: e.g., an application for planning transportation may want to model your music preference while on a specific type of transportation (e.g., bicycle, bus, etc.).

Figure 1 schematically shows a general FLaaS architecture for these and other use cases. Applications can request FL-modelling support while executed on mobile devices, or IoT and home devices like personal assistants and smart TVs (as shown in figure 1) or any other type of electronic devices. Also, FLaaS can employ edge computing nodes ("E" on figure 1), in base stations of communications networks or any other nodes, to improve ML convergence, but not compromising users' privacy. Different client devices involved in the FL, through his FLaaS AI/ML (Artificial Intelligence/Machine Learning) module (F in figure 1), will send (11) the Learned ML parameters to the central FLaaS node (CN in figure 1), either directly or through an edge computing node. The involved client devices will receive (12) from the central node (directly or through an edge computing node) the ML global model.

The client devices can use the ML results and inferences themselves or send (13) them to another device. Analogously, they can obtain the personal data and commands themselves or receive (14) them from another device.

The central node (also called central server) can comprise one or more computing devices as for example servers, which maybe co-located or located in different locations and connected by a communications network.

Several challenges (overcome by the proposed FLaaS) arise to support these use cases. Some of these challenges are:

a) Permission management across applications and services: Mobile and IoT (Internet of Things) systems provides mechanisms to grant application and services access to data such as mobile sensors, location, contacts, calendar, etc. Such access is typically given at a very coarse granularity (e.g., all-or-nothing), and can be unrestricted or, more recently, granted per application. On top of these traditional permissions, FLaaS has to provide mechanisms to specify permissions across applications and services to share data and models among them. Further, it has to provide security mechanisms to guarantee these per- missions are respected.

b) Privacy-preserving schemes: In FLaaS deployment scenarios and use cases, multiple applications and services can be involved in the FL execution. In order to guarantee the privacy of customers' data, it is critical to leverage privacy-preserving mechanisms in the construction of FL models. In FLaaS, Differential privacy (DP) is leveraged to provide further privacy guarantees to participating clients.

c) Exchange model across a (hierarchical) network with FL: As depicted in Figure 1, FLaaS can build models in a hierarchical fashion across different network layers: end-user device, ISP (Internet Service Provider) edge nodes, or the central server. Recent works considering the hierarchical FL case, where multiple network stages are involved in the training process, showed convergence and accuracy can be improved with proper designs under such settings (see for example, L.Liu, J.Zhang, S.Song and K.B.Letaief "Client-edge-cloud hierarchical federated learning"; M.Salehi Heydar Abad, E.Ozfatura, D.Gunduz and O.Ercetin "Hierarchical federated learning across heterogeneous cellular networks"; or C.Briggs, Z.Fan and P.Andras " Federated learning with hierarchical clustering of local updates to improve training on non-iid data"). FLaaS can build on these works to perform its hierarchical use cases, however, the design of optimal hierarchical FL methods is still an open research problem beyond the scope of this invention.

d) Training convergence and performance: As mentioned earlier, the usage of DP (Differential Privacy) in multi-stage training and the hierarchical FL approach impact the convergence and performance of FL models. However, in FLaaS, the possibility of building cross-application models introduces another dimension, potentially impacting model convergence and performance.

e) Usability: Every service platform should enable a customer to use its services with limited overhead and knowledge of the underlying technology. On the one hand, existing commercial MLaaS platforms provide users with APIs and graphical user interfaces (GUI) to configure and use ML services in cloud environments. However, these APIs are not designed to deal with cross-application model building, nor tailored for FL services. On the other hand, existing FL libraries are still in prototype phase and cannot support a service model, and do not provide GUIs, or high-level service APIs. They also do not support cross-application ML modeling. FLaaS builds on these existing works and provides high-level APIs to support model building across applications on the same device and across the network, and software libraries or software development kits (SDKs) for application developers to include the service in their apps and devices.

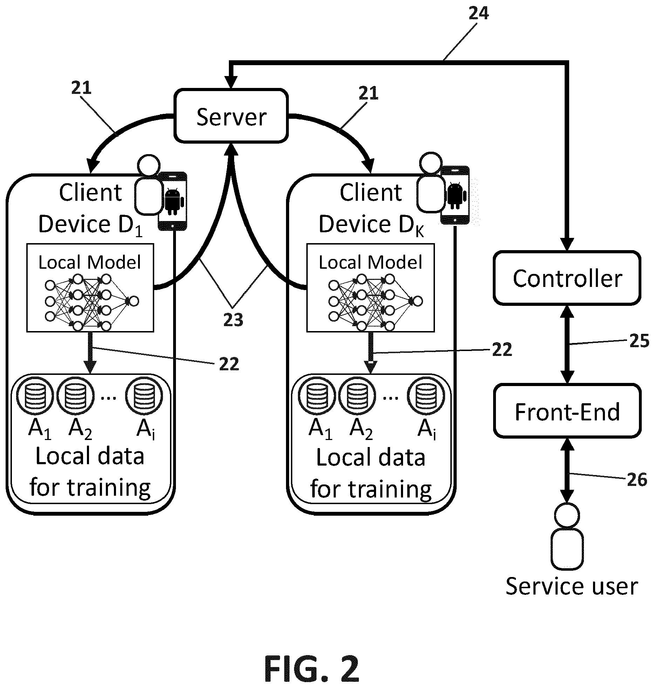

In an embodiment, FLaaS comprises the following main components (illustrated in Figure 2), with basic interactions between each other:

- Front-End: It is the main interface for customers (also called users) of the FL service (e.g., application and service developers) to bootstrap, configure, and terminate the service. It may run a GUI (Graphical User Interface), process the front-end API calls from customers (or from the GUI), and call functions on the Controller to execute customer requests. Between the service users and the Front-End, information can be exchanged (26) regarding, for example, the use case requirements, the system configuration or the budget definitions, among others.

- Controller: It is in charge of taking as input the command received from the Front-End, and executing the required steps to configure the service, e.g., initialize the model, set the appropriate permissions, etc. Once the service is started, the Controller may be also in charge of monitoring service health, budget, and terminating it when requested. Between the Front-End and the Controller, information can be exchanged (25) regarding, for example, the service configuration, the permission settings and for sharing the results, among others.

- Central Server and Clients (also called Client devices, user devices or just devices e.g., mobile or home devices, edge nodes or generally speaking any electronic device): They are the elements actually in charge of executing the FL algorithms and protocol. The Central Server, hosting the Controller and Front-End, is under the administrative domain of FLaaS, while the Clients are usually in another domain, e.g., at end-user side. Each Client runs a FLaaS module directly provided by the FLaaS provider (as illustrated in figure 1). Each client may have its local ML model and training data ($A_1$, $A_2$...). In addition, every application on the FLaaS Clients usually needs to embed a software library, providing the required functions that can be accessed via client APIs.

Between the Controller and the Central Server, information can be exchanged (24) regarding, for example, the Model initialization/execution, permission settings, service health monitoring, budget monitoring, service termination or result collection, among others.

For simplicity, this text refers to a single central server (or more generally speaking a central computing node); however, in practice, said central computing node can comprise one or more computing servers, which maybe co-located or located in different locations and connected by a communications network.

The client devices may be any type of electronic devices such as mobile phones, smartphones, laptops, IoT devices, Smart TVs, Personal Computers (PCs), tablets, etc or any other electronic device with processing capabilities.

Specifically, in an embodiment, the central server and the client devices may perform the following actions and interactions between them, during FL training models in FLaaS:

a) The central server collects user requirements for requested machine learning modelling service and construct the Global ML Model structure based on service requirements. Then it shares the Global ML Model with the client devices.

b) Each client device (electronic device) receives the Global ML Model, determines Local ML Model based on Global Model and Local training data and provides Local ML Model to the central server.

c) The central server receives the Local ML Model from each client device (the value of the parameters for the global model $w^k_t$ for current iteration t), determines an updated Global ML Model for the next iteration (the value of the parameters for the global model $w_{t+1}$) based on the Local ML Model received and shares the Global ML Model with the client devices. The client devices determine Local Updates of the Local ML Model and provide the updates to the central server and the step is repeated (that is, the central server receives the Local ML models and determines again an updated Global ML Model to be sent again to the client devices). This step can be repeated several times until predefined criteria are met and then it is considered that a final Global ML Model has been obtained. The predefined criteria may be for example, until a certain number of iterations is reached, until the Global Model error is below a threshold, until there are no more Local Updates from the client devices, until the information about local updates from the client devices does not change or changes below a threshold (that is, the updated information is the same or almost the same as the previous iteration(s)).

In this context "local" means related or specific to the client device (as opposite to "Global" or "Central"). That is Local ML model means a ML model for a client device and Local training data means training data obtained in the client device.

Summarizing, the central server will share with the client devices the Global Model built by the Server (with Federated Aggregation, FA) (21), the client devices will personalize the Global Model (becoming a local model) on local data of participating applications (22) and will report back to the central server the local model for FA (23), until it is considered that a final Global ML Model is obtained.

The communication between the central server and the client devices may be made using any communications network (the same network for all the devices or several communications networks). For example, a mobile 2G, 3G, 4G or 5G communications network or any other wired or wireless communications network.

In an embodiment, FLaaS comprises the following main APIS and software libraries:

- Front-End APIs: FLaaS can be configured via front-end APIs, or a GUI that uses the front-end APIs under the hood. These APIs can be classified as follows:

  ▪ DATA APIs: They allow customers to describe data types the model takes as input for training or produces as output after inference. This may be specified via JSON (JavaScript Object Notation) format or any other data format, and may include fields, as for example, name and type of each input or output data or feature.

  ▪ MODEL APIs: They enable customers to create an ML model, define model type and parameters, or choose the option of parameter self-tuning. Also, these APIs allow customers to specify properties in the ML modelling, in case the model is built across different (or partially different) data from multiple customers, or as an average/ensemble across models.

  ▪ PERMISSION APIs: They enable customers to specify if and which other customers/users (e.g., apps) can access said data, or how other customers can access the model for inference, or to build models to solve new ML problems.

- Client APIs: A set of functions need to be embedded in the application code to perform FLaaS functionality. To this goal, a software library (implemented as an Android SDK or using any other type of tool) may be designed, providing the implementation of such functions that are then exposed via a set of APIs. The library includes main functions such as, for example:

- Authenticate API to the Central Server.

- Support on-device training for ML applications including, among others: load a model (either pre-trained or with initial parameters), add training samples, conduct model training, predict from test samples, and save or load model parameters to device memory.

- Exchange/share data between FLaaS-enabled apps.

For training on-device (client device) a new ML model, it is required a significant amount of processing power and many communication rounds, making it impractical in user devices with limited resources. However, the proposed solution FLaaS, thank you to its features, it is suitable for currently resource-constrained elements (for example, mobile devices and IoT devices and networks). Transfer Learning (TL) is an ML technique that takes a model built for a basic task T (e.g., image recognition), and reuses it as the starting point for a new task, but related to T, to speed up training and improve model performance (in other words, TL focuses on storing knowledge gained while solving one problem and applying it to a different but related problem). Among other features (that will be explained later), FLaaS may employ TL (or any other techniques) to make training and model performance, less resource-consuming.

For a better understanding of how the FLaaS works, the algorithmic details of how the main use cases outlined are supported by FLaaS design will be explained here.

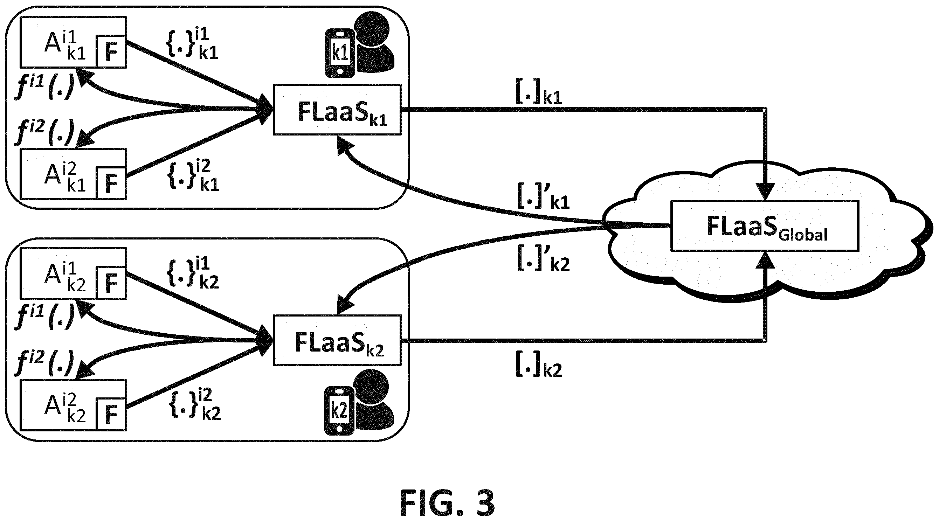

Figure 3 shows a schematic diagram of the generic FLaaS ML modelling architecture according to one embodiment in the present invention. Said generic architecture will be particularized for each use case later. In figure 3, client devices k1 and k2 (in this example, mobile phones) are shown, each with a FLaaS local module $FLaaS_{k1}$ and $FLaaS_{k2}$ respectively. Each client device has several applications (software applications) $A^{i1}$, $A^{i2}$ running on them and they communicate with a node where the aggregation is done in its FLaaS module ($FLaaS_{Global}$). This node can be the central server or an edge node (such a Base Station/Antenna of the mobile network, which may then communicate with a central server). That is, there can be an intermediate layer, between the client devices and the central server, which perform intermediate aggregation from the client devices and communicates it to the central server. In other words, Figure 3 outlines the general interactions of applications (apps) i1 and i2 with the FLaaS Local module running on user devices k and m.

With FLaaS module, it is meant the (software and/or hardware) elements of the devices or server in charge of performing the task related to FLaaS.

For simplicity reasons, in figures 3-9 and in the following use cases explanations, only two applications (A= {i1, i2}) and two client devices (K={k1, k2}) are shown, but these explanations and cases are applicable to a higher number of applications or any number of client devices. The applications will be any (software) application (of any type) running in K client devices which want to use the FL service.

Use case 1: FL modeling per application for existing ML problems:

This use case 1 is focused on single-application FL modelling, that is, scenarios where there is a single-application or where there is more than one application, but each application (also called app) wants to build its own model independently of the other applications. In this case, for the single-application FL modelling, the following actions will be made in each iteration (according to an embodiment of the invention):

- Obtain global values for a set of parameters (w) of a machine-learned model.
- In each participating client device, train the machine-learned model on local data of the participating application. For privacy preserving all data should be stored on the device and never leave the device.
- Obtain updated matrix that summarizes all updated values for the set of parameters of the machine-learned model. The update matrix may have a pre-defined and pre-agreed structure. This allows easy serialization at the client device, sending to the central server, and deserialization at the (central) server. The set of updated parameters can be just a vector of values (a one-dimension matrix), but generally speaking it will be a N-dimension matrix of values, as more updated data can be sent. For example, if the client devices share the updated values every round (every E iterations), the client devices may want to send the parameter values of each iteration; then the updated data will be a matrix of size E*|W| (assuming W is the vector of parameters to be sent).
- Communicate updated matrix to the server computing device to update global machine-learned model.

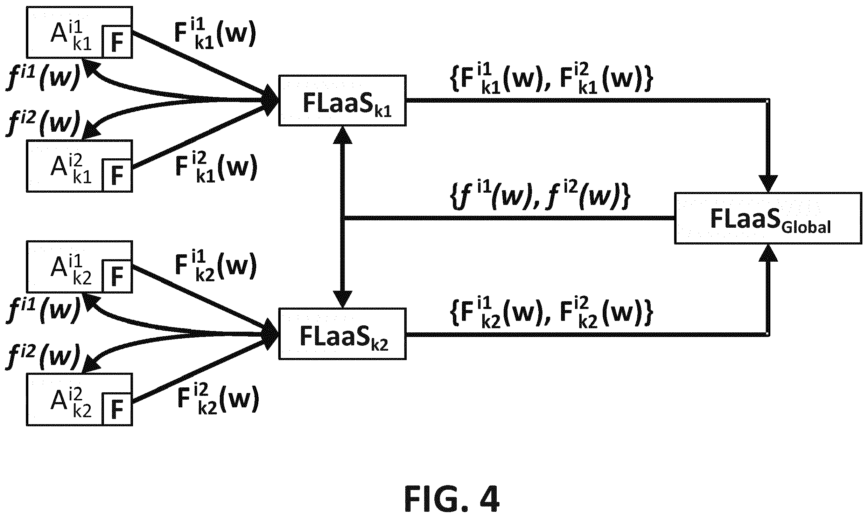

Figure 4 shows the modelling architecture for this use case with 2 independent applications ($A^{i1}$ and $A^{i2}$) building

their FL models using the FLaaS modules of the client device. Figure 4 provides an example of how both applications interact with the FLaaS modules. It is assumed that the applications $i \in A$ (where A is the set of applications installed in each device participating in FLaaS) installed on device $k \in K$ are interested in building FL models with FLaaS and each app wants its own model built on its local data. Even though, in figure 4 and in this explanation, two apps are shown, this explanation applies as well to other scenarios where there are 1, 2 or, generally speaking, any number of applications.

The applications communicate to the FLaaS Local module their local FL models built. Thus, for app i and device k, following the notation of figure 3:

$$\{.\}^i_k = F^i_k(w) \; \forall i \in A$$

Where $F^i_k(w)$ is the function $F_k$ (previously defined) corresponding to application i of device k. The FLaaS Local module collects all such models from individual apps, and transmits them in a compressed format to the FLaaS Global module, i.e.:

$$[.]_k = [F^i_k(w)], \; \forall i \in A, \; \forall k \in K$$

is sent to the FLaaS Global module.

Subsequently, the FLaaS Global module performs Federated Aggregation across all reported local models and builds one global weighted average model per app, which it then communicates back to the participating devices per app, i.e.:

$$[.]'_k = [f^i(w)], \; \forall i \in A, \; \forall k \in K$$

And the local applications calculate again the updated local model (represented by the function F with the updated local parameter values w) to be sent to the FLaaS global for the next iteration.

Use case 2: Jointly-trained FL modelling between group of apps for existing ML problem:

In this scenario, it is assumed that a group of two or more applications $i \in A$ installed on device $k \in K$, are interested in collaborating and building a common ML model with FLaaS. This model will be shared among all apps, but will be built jointly on each app's local data (joint FL modelling).

For the multi-application joint FL modelling, the following actions will be made in each iteration (according to an embodiment of the invention):

- Obtain global values for a set of parameters of a machine -learned model.
- In each participating client device, train the machine-learned model on local data of all participating applications by either: (1) collecting all needed data at the Service's Local Module of the device for local training or (2) collecting individually-trained machine-learned models of participating apps at the Service's Local Module for shared model optimization. For privacy preserving all data should be stored on the device and never leave the device.
- Obtain updated matrix thar summarizes all updated values for the set of parameters of the machine-learned model. The update matrix may have a pre-defined and pre-agreed structures. This allows easy serialization at the client device, sending to the central server, and deserialization at the server.
- Communicate updated matrix to the server computing device to update global machine-learned model.

In this case, using generic Figure 3 as a basis, it is redefined the general interactions of a group G of apps i1 and i2 (i.e., G={i1,i2}) with the FLaaS Local module running on devices k1 and k2, in order to build such a joint model among them. "A" is the general set of applications installed in each client device and "G" will be the subset of applications interested in doing the collaborative training (jointly training) of this use case.

In fact, according to embodiments of the invention, there are at least three different ways that such joint model can be built, by sharing different elements with FLaaS Local (these are only some examples and other ways of building such joint model are possible):

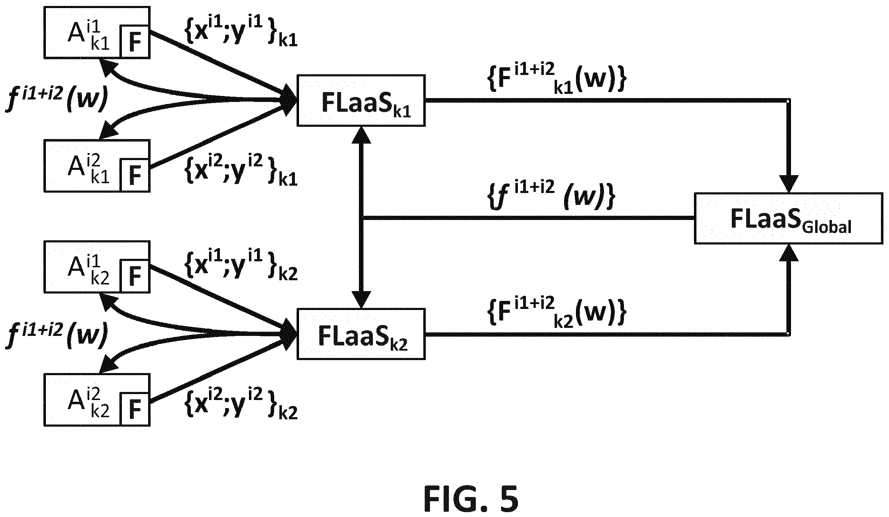

2.1: Sharing local data (Figure 5).

$$\{.\}^i_k = \{x^i;y^i\}_k \; \forall \, i \in G \; \forall \, k \in K$$

As shown in figure 5, apps in G share with the FLaaS local module of the device, local (training) data (for a certain device and for a certain application) they are willing to provide in the collaboration. FLaaS local module collects all shared data, which preferably should have the same format, and performs SGD on them in an iterative fashion to build the final local model. For this, participating applications must have been permitted to share user data across applications.

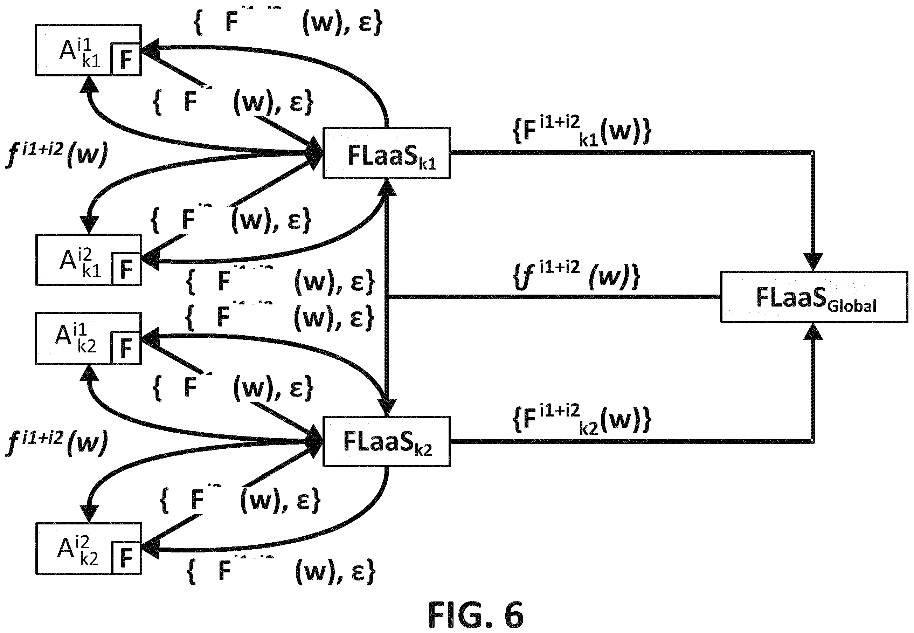

2.2.: Sharing personalized gradients_(Figure 6):

$$\{.\}^i_k = \{\nabla F^i_k(w_t), \varepsilon\} \; \forall \, i \in G \; \forall \, k \in K$$

As shown in figure 6, apps in G share with FLaaS local module their personalized gradient for iteration t along with the error $\varepsilon$, which was acquired after training their local model for the $t^{th}$ iteration. In this case, FLaaS Local uses the received gradients $g^i_k$ per iteration t to incrementally correct the locally built joint model. Then, it can release back to the apps the improved joint model, before receiving new updates from them in the next iteration.

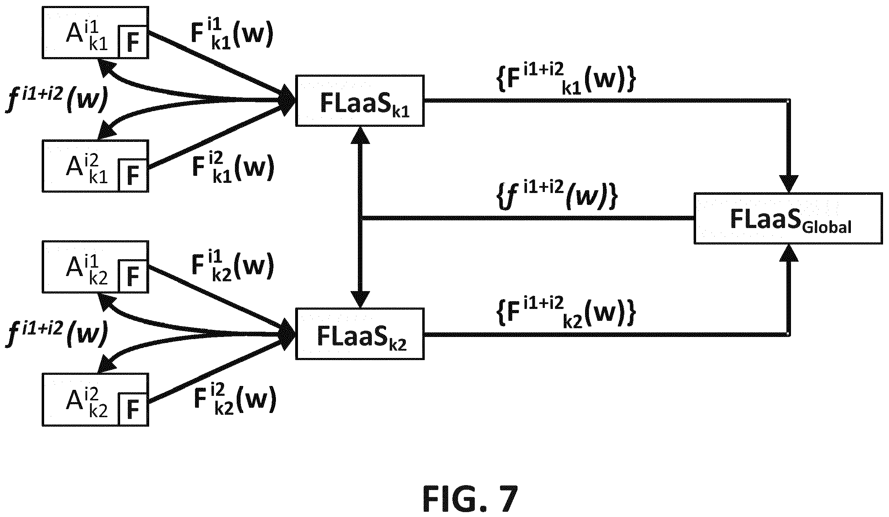

2.3.: Sharing personalized model (Figure 7):

$$\{.\}^i_k = F^i_k(w) \; \forall \, i \in G \; \forall \, k \in K$$

As shown in figure 7, apps in G share with FLaaS local module their complete personalized models built on their data, after they perform E iterations. In this case, FLaaS Local performs Federated Aggregation on the received models, thus, building a joint model that covers all apps in G, with a generalized, albeit, local model. In the second and third ways (2.2 and 2.3), the apps do not need to worry about permissions for sharing data, as they only share gradients or models.

Note that the user data (training) of the application never leave the user devices, in any of the aforementioned cases.

Then, for any of these three ways, FLaaS local module or each device reports to FLaaS Global the model jointly built on user data or model updates:

$$[.]_k = [F^G_k(w)], \; \forall i \in G, \; \forall k \in K$$

In the particular case of figures 5-7, $F^G = F^{i1+i2}$

Subsequently, FLaaS Global (usually in the central server) performs Federated Aggregation across all collected local models and builds a global weighted averaged model, for each collaborating group G of applications. Then, according to the example shown in figures 5-7, it communicates each such global model back to the participating devices, i.e.:

$$[.]^i_k = [f^G(w)], \; \forall \, G \text{ and } \forall k \in K$$

Finally, FLaaS local module of each device Local distributes the global model to each application of the collaborating group G, i.e.:

$$f^i(.) = f^G(w), \; \forall i \in G$$

In the particular case of figures 5-7, $f^G = f^{i1+i2}$.

In an embodiment, this is repeated for each communication or optimization round; E iterations are done locally to build $F^i_k$.

Use case 3: Jointly-trained FL modeling between group of apps for a new ML problem:

In this scenario, it is assumed that an application i1 (primary) is interested in solving a new ML problem (to obtain a valid ML model) but does not have all data required to solve it. Therefore, it comes to an agreement with other, secondary apps (i2) to receive such needed data ($x^{i2'}$) to build the new model, using FLaaS. Notice that these additional data may be a subset of the full data that secondary apps produce, i.e., $x^{i2'} \subseteq x^{i2}$. In a similar fashion as before, the collaborating apps must share data or models, in order to enable joint model building (as disclosed in the generic case of figure 3). In fact, according to embodiments of the invention, there are at least two different ways that such joint model can be built, by sharing different elements with FLaaS Local (these are only some examples and other ways of building such joint model are possible):

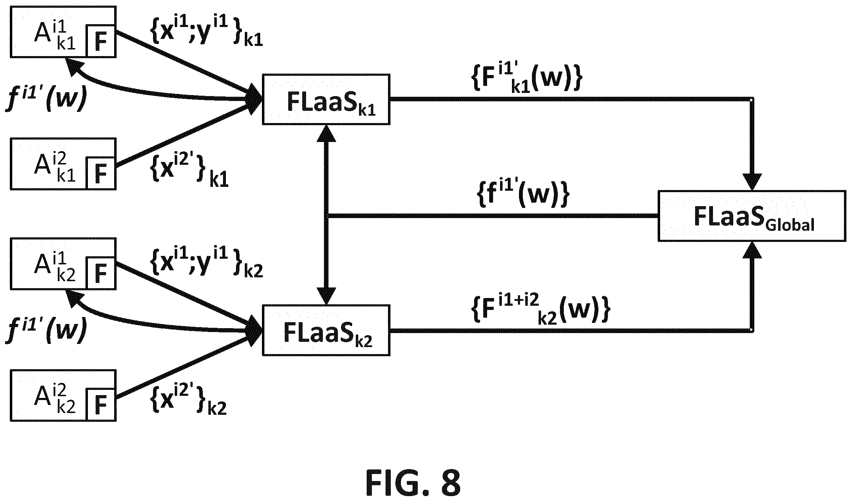

3.1. Sharing local data (Figure 8)

Primary application i1: $\{.\}^{i1}_k = \{x^{i1}; y^{i1}\}_k$
Secondary applications i2: $\{.\}^{i2}_k = \{x^{i2'}\}_k$

Generally speaking, the secondary applications provide "extra" input data (that are represented by x), to solve the new problem of the primary application (represented by y). For example, Spotify provides data on music usage per hour (x) to Uber, to solve the problem of what kind of music (output y) the user likes to listen to when in an Uber car (i.e., by matching time periods of Uber usage and Spotify usage).

As shown in figure 8, in this scenario, the primary and secondary apps share with the FLaaS local module of the device, local data (for a certain device and for a certain application) they are willing to provide in the collaboration. FLaaS Local module collects all shared data and performs SGD in an iterative fashion, to build the final local model. Here, as above explained, primary and secondary apps share different data.

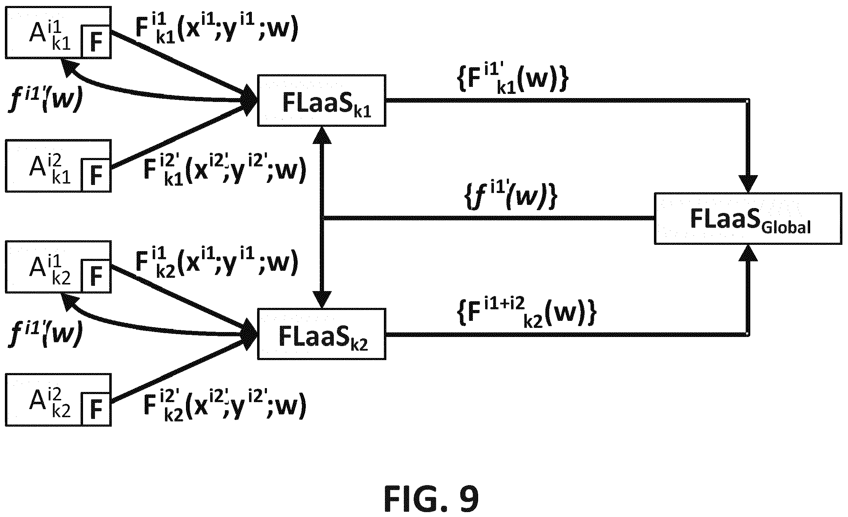

3.2. Sharing personalized model (Figure 9)

Primary application i: $\{.\}^{i1}_k = F^{i1}_k(w)$
Secondary applications j: $\{.\}^{i2}_k = F^{i2'}_k(w)$

As shown in figure 9, in this scenario, apps provide trained local models that solve portion of the overall new problem, after E iterations. In other words, apps shared with FLaaS local module their complete personalized models built on their data, after they perform E iterations. Here, primary and secondary apps share different models.

Then, FLaaS local module builds a meta-model or ensemble model (e.g., based on hierarchical or ensemble modeling) to solve the new problem at hand. A meta-model or ensemble model is a model that uses as inputs (or outputs) the decisions of a set of models. For example, if an app wants to build a model that predicts what music to put for each transportation mode the user uses, then this model could be a model that takes as input the outputs of 1) a model that predicts what music the user likes, 2) a model that predicts what transportation mode the user is using right now (for example, based on accelerometer values).

In either case 3.1 or 3.2, again, no data leave the devices.

Then, for either of the ways previously described 3.1 and 3.2, FLaaS local module reports to FLaaS Global the model jointly built:

$$[.]_k = [F^{i1'}_k(w)], \forall i1' \in A' \text{ and } \forall k \in K$$

A' is the set of primary apps building the novel models and does not include secondary apps helping. The ' is used to differentiate the regular primary application i1 (for example, i1= Uber) from the modified primary app i1' (e.g. i1'=Uber') of this use case, which is the original app+something different (e.g., Uber' would be the original Uber application with the additional feature of trying to play Spotify music while on Uber). The point of ' is for the app i1 (and its corresponding

model $F^{i1}{}_k(w)$ denoted earlier in the other use cases 1 and 2) to be differentiated of with $F^{i1'}{}_k(w)$ defined here.

The same applies to the secondary application i2. That is, the 'is used to distinguish apps i2 (presented earlier in use-cases 1 and 2) from these secondary apps i2j' which perform portions of the work in this scenario.

The ' is only a notation distinction for the formulae. However, if it is assumed that the regular application i1 of use cases 1 and 2 (e.g. Uber) and the application i1' of use case 3 (Uber') are conceptually the same app, and if it is assumed that i2 (e.g. Spotify) of use cases 1 and 2 and i2' (Spotify') of use case 3, then the ' notation can disappear for use case 3.

Subsequently, FLaaS Global (usually in the central server) performs Federated Aggregation across collected models and builds a global weighted averaged model for each primary app model requested, and communicates each such global model back to participating devices, i.e.:

$$[.]'_k = [f^{i1'}(w)], \ \forall \ i1' \in A', \ \forall \ k \in K$$

Finally, FLaaS local module of each device distributes the global model to each primary app (not to the secondary applications), i.e.:

$$f(.) = f^{i1'}(w), \ \forall i1' \in A'$$

A PoC (Proof of Concept) implementation of the proposed solution (FLaaS) has been performed to examine its feasibility and basics on its ML and system performance.

For this PoC implementation on the client side, Android OS 10 (API 29) has been used. Specifically, the FLaaS module has been implemented as a standalone user level app and the library to be embedded in FLaaS-enabled apps as an SDK. Both FLaaS module and SDK leverage TensorFlow Lite 2.2.0 and Transfer API library from Google. Exchange of data between FLaaS-enabled apps and the FLaaS module is performed using the OS's BroadcastReceiver. The central server is implemented using Django 3.07 with Python 3.7. Note that currently, controller and Front-End were not implemented as they do not affect the performance of the PoC. Finally, the FLaaS-enabled apps used for the PoC are toy apps only performing the FLaaS functionality and storing a set of data. The current FLaaS version is implemented in 4.6k lines of Java code for the FL-related modules, and 2k lines of Python for server modules. This is only an example for PoC implementation and, of course, the proposed invention can be applied for any other type of devices, technologies, applications...

For the PoC, the performance of the implementation has been evaluated with respect to 5 performance metrics: Machine learning performance with test accuracy, on-device memory consumption, on-device CPU utilization, on-device execution time and on-device power consumption. And three different Android phones (2 new and 1 older for comparison) has been used: D1: Google Pixel 4 (2.42 GHz octa-core processor with 6GB LPDDR4x RAM), D2: Google Pixel 3a (2.0 GHz octa-core processor with 4GB LPDDR4 RAM) and D3: Google Nexus 5X (1.8 GHz hexa-core with 2GB LPDDR3 RAM). These devices have been updated to the latest supported OS (Android 10 for D1 and D2, and Android 8.1 for D3), and disabled automated software updates, battery saver and adaptive brightness features when applicable. Further the devices have been set under Flight Mode, enabled WiFi access, connected to a stable WiFi 5GHz network, and set the brightness level to minimum.

As base model to initialize the FL process, MobileNetv2, pre-trained with ImageNet dataset (see for example J.Deng, W.Dong, R.Socher, L.-J.Li, K.Li and L.Fei-Fei. ImageNet: A Large-Scale Hierarchical Image Database), while as dataset for model training and testing we use CIFAR-10 [32] that is distributed across experimental devices.

In the experiments, parameter values used in other FL works with CIFAR-10 has been applied: as for example, 20 samples per batch, 50 epochs, 20 FL rounds, and 250 or 500 samples per user (S), corresponding to the two scenarios of individual app or joint FL modeling of two apps via data sharing. For measuring ML performance, FL on 100 users (devices) for the two scenarios in 30 FL rounds have been simulated. For measuring the on-device cost, 10 users' worth of data and execute FL modeling for the two scenarios on the real devices have been assumed. This is only an example for PoC implementation and, of course, the proposed invention can be applied for any other parameter values, number of users, etc.

The results obtained demonstrate that when two apps share data (S=250+250) they can achieve 10% better accuracy with the model trained jointly at FLaaS Local, than individual models with half the data (S=250).

It has been also measured the cost in execution time and on-device memory, averaged across 10 users' data, as computed on the three real devices, and with two use case scenarios per FL round. First, it has been noted that all costs reported are, on average, similar through the various FL rounds. This means that a device joining any of the FL rounds is expected to have similar cost regardless if it is the beginning of the FL process or later. Second, it has been found out that execution in the newer devices D1 and D2 is significantly faster than the older device D3, and this is true

EP 4 002 231 A1

for both image loading, and especially model training. Third, and expected, doubling the sample size as required in the second use case scenario (joint modeling), has the same execution cost per image loaded, but practically doubles the execution cost for model training. Forth, it has been observed that the average memory cost for loading images is same across devices, regardless of scenario. Fifth, and expected, when the sample size doubles (S=500), the model training consumes about double the memory than for S=250. Finally, the cost of data sharing between apps for materializing the second use case scenario has been measured and it has been found out that sending 250(500) samples between apps takes an extra time of 54.7(65.9)ms, and consumes 1.1(1.6)MBs of memory, on average, demonstrating the viability of this option for joint FL modeling.

On-device consumption and CPU utilization have been also measured. The mean CPU utilization per round for a simple size of S=250 is 16.6%, 18.1% and 31.1%, for the 3 devices respectively, whereas for S=500 is 27.0%, 34.0% and 33.3%, for the 3 devices respectively. Interestingly, for S=250, D1 and D2 have similar average power consumption of 75.6mAh and 81.0mAh, per FL round, and for S=500 they have similar average power consumption of 123.2mAh and 138.0mAh, per FL round. Surprisingly, D3 has 10-12x higher power consumption of 924.8mAh for S=250 and 1563.4mAh for S=500.

Summarizing, in contrast to the existing solutions, FLaaS provides a FL-as-a-Service model (with high-level APIs) enabling: a) independent 3rd-party applications (i.e., external to FLaaS operator) to collaborate and combine their common-type data and models from different application (of the same kind / category) for building joint meta-models for better accuracy; b) collaborative 3rd-party applications to combine their partial models from multiple 3rd-party applications into meta-models, in order to solve new joint problems, never before possible due to data siloing and applications' isolation; c) 3rd-party applications to build the aforementioned FLaaS models on edge nodes, desktops, mobile phones or other low-resource (IoT) devices; that is, it provides capabilities for running the service on low resources devices, such as mobile phones.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for improving Federated Machine Learning between a set of K participating devices, K>=1, where a common set of participating applications is installed in each participating device, where the participating devices communicate through one of more communications networks with a central computing node, the method comprising the following steps:

    a) The participating devices receiving from the central computing node information related to a set of parameter values for a global machine learning model for each participating application and going to step b);
    b) Each participating device, for each participating application, based on local training data obtained by the participating application and in the received information related to the set of parameter values for the global machine learning model for the participating application, determining information related to an updated set of parameter values for a local machine learning model for the participating application in the participating device; and sending the information to the central computing node and going to step c);
    c) The central computing node determining an updated set of parameters for the global machine learning model for each participating application based on aggregation of the information received from the participating devices and, if certain preestablished stop criteria are not fulfilled, sending information related to the updated set of parameters for the global machine learning model for each participating application to the participating devices and going to step a).

17

2. A method for improving Federated Machine Learning between a set of K participating devices, K>=1, where a common set of participating applications is installed in each participating device, where the participating devices communicate through one of more communications networks with a central computing node, the method comprising the following steps:

   a) The participating devices receiving from the central computing node information related to a set of parameter values for a global machine learning model common for all participating applications and going to step b);
   b) Each participating device, based on local training data obtained by the participating applications and in the received information related to the set of parameter values for the global machine learning model, determining information related to an updated local set of parameter values for a common local machine learning model for all the participating applications in the participating device and sending the information to the central computing node and going to step c);
   c) The central computing node determining an updated set of parameters for the common global machine learning model based on aggregation of the information received from the participating devices and, if certain preestablished stop criteria are not fulfilled, sending information related to the updated set of parameters for the common global machine learning model to the participating devices and going to step a).

3. A method according to claim 2, wherein in step b), the information related to an updated local set of parameter values for the common local machine learning model is determined by each participating device training the common local machine learning model based on local training data shared by all the participating applications in each participating device.

4. A method according to claim 2, wherein in step b), each participating application trains a local machine learning model personalized by each participating application and shares information about said personalized local machine learning model and, based on said shared information by all the participating applications, the participating devices determines the information related to an updated local set of parameter values for the common local machine learning model of the participating device.

5. A method for improving Federated Machine Learning between a set of K participating devices, K>=1, where a common set of participating applications is installed in each participating device, and where the participating devices communicate through one of more communications networks with a central computing node, the method comprising the following steps:

   a) The participating devices receiving from the central computing node information related to a set of parameter values for a global machine learning model for a certain participating application, called primary application and going to step b);
   b) Each participating device, based on local training data obtained by the primary application, on local training data obtained by one or more other participating applications, called secondary applications, and in the received information related to the set of parameter values for the global machine learning model, determining information related to an updated local set of parameter values for a local machine learning model for the primary application and sending the information to the central computing node and going to step c);
   c) The central computing node determining an updated set of parameters for the global machine learning model for the primary application, based on aggregation of the information received from the participating devices and, if a certain preestablished stop criteria is not fulfilled, sending information related to the updated set of parameters for the common global machine learning model to the participating devices and going to step a).

6. A method according to claim 5, wherein the information related to an updated local set of parameter values for the local machine learning model for the primary application, is determined by each participating device training the local machine learning model based on local training data shared by the primary application and by the secondary applications.

7. A method according to claim 6, where in step b), the primary application and the secondary applications trains a local machine learning model personalized by each participating application and shares information about said personalized local machine learning model and, based on said shared information, the device determines the information related to an updated local set of parameter values for the local machine learning model for the primary application.

8. A method according to any of the previous claims, wherein in step b) said information related to an updated local set of parameter values for the local machine learning model is related to the loss of prediction function for the local set of parameter values for the local machine learning model.

9. A method according to any of the previous claims, wherein the predefined stop criteria are one or more of the following: a certain number of iterations is reached, the global machine learning model error is below a certain threshold or the information about local updates from the participating devices is similar to the previous iteration.

10. A method according to any of the previous claims, where the participating devices are at least one of the following: mobile phones, smartphones, laptops, IoT devices, Smart TVs, Personal Computers, tablets.

11. A method according to any of the previous claims, where the central computing node is a central server or the central computing node is located in a Base Station of a mobile communication networks.

12. A system for improving Federated Machine Learning, the system comprising:

   - a central computing node;
   - a set of K participating devices, K>=1, where a common set of participating applications is installed in each participating device, where the participating devices communicate through one of more communications networks with the central computing node, and where each participating device is configured to:

      - Receive from the central computing node information related to a set of parameter values for a global machine learning model for each participating application;
      - For each participating application, based on local training data of the participating application and in the received information related to the set of parameter values for the global machine learning model for the participating application, determine information related to an updated set of parameter values for a local machine learning model for the participating application; and send the information to the central computing node;

   And where the central computing node is configured to:

      - Determine an updated set of parameters for the global machine learning model for each participating application based on aggregation of the information received from the participating devices and,
      - If certain preestablished stop criteria are not fulfilled, send information related to the updated set of parameters for the global machine learning model for each participating application to the participating devices.

13. A system for improving Federated Machine Learning, the system comprising:

   - a central computing node;
   - a set of K participating devices, K>=1, where a common set of participating applications is installed in each participating device, where the participating devices communicate through one of more communications networks with the central computing node, and where each participating device is configured to:

      - Receive from the central computing node information related to a set of parameter values for a global machine learning model common for all participating applications;
      - Based on local training data of the participating applications and in the received information related to the set of parameter values for the global machine learning model, determine information related to an updated local set of parameter values for a common local machine learning model for all the participating applications in the participating device and send the information to the central computing node;

   And where the central computing node is configured to:

      - Determine an updated set of parameters for the common global machine learning model based on aggregation of the information received from the participating devices and,
      - If certain preestablished stop criteria are not fulfilled, send information related to the updated set of parameters for the common global machine learning model to the participating devices.

14. A system for improving Federated Machine Learning, the system comprising:

- a central computing node;
- a set of K participating devices, K>=1, where a common set of participating applications is installed in each participating device, where the participating devices communicate through one of more communications networks with the central computing node, and where each participating device is configured to:

- Receive from the central computing node information related to a set of parameter values for a global machine learning model for a certain participating application, called primary application;
- Based on local training data obtained from the primary application, on local training data obtained from one or more other participating applications, called secondary applications, and in the received information related to the set of parameter values for the global machine learning model, determine information related to an updated local set of parameter values for a local machine learning model for the primary application and send the information to the central computing node;

And where the central computing node is configured to:

- Determine an updated set of parameters for the global machine learning model for the primary application, based on aggregation of the information received from the participating devices and,
- If certain preestablished stop criteria are not fulfilled, send information related to the updated set of parameters for the common global machine learning model to the participating devices.

**15.** A non-transitory digital data storage medium for storing a computer program which comprises instructions causing a computer executing the program to perform the method according to any of the claims 1-11.

**FIG. 1**

EP 4 002 231 A1

**FIG. 2**

FIG. 3

FIG. 4

$\{F^{i1+i2}_{k1}(w)\}$

$\{f^{i1+i2}_{k1}(w)\}$

$\{F^{i1+i2}_{k2}(w)\}$

$\text{FLaaS}_{Global}$

$\text{FLaaS}_{k1}$

$\text{FLaaS}_{k2}$

$\{x^{i1};y^{i1}\}_{k1}$

$\{x^{i2};y^{i2}\}_{k1}$

$\{x^{i1};y^{i1}\}_{k2}$

$\{x^{i2};y^{i2}\}_{k2}$

$A^{i1}_{k1}\;F$

$A^{i2}_{k1}\;F$

$A^{i1}_{k2}\;F$

$A^{i2}_{k2}\;F$

$f^{i1+i2}(w)$

$f^{i1+i2}(w)$

**FIG. 5**

$\{\ F^{i1+i2}(w),\ \varepsilon\}$

$\{\ F\ (w),\ \varepsilon\}$

$A^{i1}_{k1}$ F

$f^{i1+i2}(w)$

$\{\ F\ (w),\ \varepsilon\}$

$A^{i2}_{k1}$ F

$\{\ F\ (w),\ \varepsilon\}$

$\{\ F\ (w),\ \varepsilon\}$

$A^{i1}_{k2}$ F

$\{\ F\ (w),\ \varepsilon\}$

$f^{i1+i2}(w)$

$A^{i2}_{k2}$ F

$\{\ F\ (w),\ \varepsilon\}$

$\{\ F\ (w),\ \varepsilon\}$

$FLaaS_{k1}$

$FLaaS_{k2}$

$\{F^{i1+i2}_{k1}(w)\}$

$\{f^{i1+i2}(w)\}$

$\{F^{i1+i2}_{k2}(w)\}$

$FLaaS_{Global}$

**FIG. 6**

**FIG. 7**

EP 4 002 231 A1

FIG. 8

$FLaaS_{Global}$

$FLaaS_{k1}$

$FLaaS_{k2}$

$\{F^{i1'}_{k1}(w)\}$

$\{f^{i1'}(w)\}$

$\{F^{i1+i2}_{k2}(w)\}$

$A^{i1}_{k1}$ F

$A^{i2}_{k1}$ F

$A^{i1}_{k2}$ F

$A^{i2}_{k2}$ F

$\{x^{i1};y^{i1}\}_{k1}$

$\{x^{i2'}\}_{k1}$

$\{x^{i1};y^{i1}\}_{k2}$

$\{x^{i2'}\}_{k2}$

$f^{i1'}(w)$

$f^{i1'}(w)$

FIG. 9

Europäisches
Patentamt

European
Patent Office

Office européen
des brevets

# EUROPEAN SEARCH REPORT

**Application Number**

EP 20 38 3001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI YANG BRYAN LIM ET AL: "Federated Learning in Mobile Edge Networks: A Comprehensive Survey", ARXIV.ORG, CORNELL UNIVERSITY LIBRARY, 201 OLIN LIBRARY CORNELL UNIVERSITY ITHACA, NY 14853, 26 September 2019 (2019-09-26), XP081609109, * Section I; page 1 * * Section II.B; page 5 - page 6; figure 4 * * Section III.A; page 9 - page 11 * * page 13 * | 1-15 | INV. G06N20/20 |
| A | LI LI ET AL: "A review of applications in federated learning", COMPUTERS & INDUSTRIAL ENGINEERING, PERGAMON, AMSTERDAM, NL, vol. 149, 18 September 2020 (2020-09-18), XP086316045, ISSN: 0360-8352, DOI: 10.1016/J.CIE.2020.106854 [retrieved on 2020-09-18] * Section 2.; page 2 - page 4 * | 1-15 | |
| A | DIANLEI XU ET AL: "A Survey on Edge Intelligence", ARXIV.ORG, CORNELL UNIVERSITY LIBRARY, 201 OLIN LIBRARY CORNELL UNIVERSITY ITHACA, NY 14853, 26 March 2020 (2020-03-26), XP081630635, * Sections III.B; IV.B,C; page 9 - page 19; figure 15 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 12 May 2021 | Suarez Y Gonzalez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.DENG ; W.DONG ; R.SOCHER ; L.-J.LI ; K.LI ; L.FEI-FEI.** *ImageNet: A Large-Scale Hierarchical Image Database*